# EUROPÄISCHE PATENTANMELDUNG

(11) **EP 1 811 218 A1**
(43) Veröffentlichungstag der Anmeldung: **25.07.2007**
(21) Anmeldenummer: 07001288.5
(22) Anmeldetag: 22.01.2007
(51) Int. Cl.: F16L 1/032, A01G 25/06, E02B 11/00, E02F 5/10

(54) **Verfahren und Vorrichtung zum unterflurigen Verlegen von Membranschläuchen**

(30) Priorität: 24.01.2006 DE 102006003352; 24.02.2006 DE 102006008698
(71) Anmelder: Kneussle, Winfried, 88250 Weingarten (DE)
(72) Erfinder: Kneussle, Winfried, 88250 Weingarten (DE)
(74) Vertreter: Söltenfuss, Dirk Christian

(57) **Zusammenfassung**

Es wird ein Verfahren zum unterflurigen Verlegen eines Membranschlauches (12) vorgeschlagen, wie es in vorteilhafter Weise für die Installation eines OSMO-DRAIN^{®}-Systems anwendbar ist. Das Verfahren umfasst die Schritte des Schneidens eines oder mehrerer paralleler Schlitze(s) (46) in den Boden mit einer Tiefe von mindestens der Einbautiefe des Membranschlauches (12) und einer Breite kleiner oder gleich dem Durchmesser des Membranschlauches (12) unter gleichzeitiger Lockerung des Erdreichs zumindest im Einbautiefenbereich des Membranschlauches durch eine wechselweise Querbewegung des Erdreichs; des Aufweitens des/der geschnittenen Schlitze(s) (46) auf eine Breite von wenigstens dem Durchmesser des Membranschlauches; und des Einlegens jeweils eines Membranschlauches (12) in den/die aufgeweiteten Schlitz(e) (46).

## Beschreibung

Die vorliegende Erfindung betrifft ein Verfahren und eine Vorrichtung zum unterflurigen Verlegen von Membranschläuchen. Mit diesem Verfahren und dieser Vorrichtung werden insbesondere die Voraussetzungen geschaffen, den Einbau eines so genannten OSMO-DRAIN^{®}-Systems mit allen seinen Funktionalitäten zu ermöglichen.

Zur Pflege von Rasenflächen und Sportrasenflächen, aber auch von Garten- und Parkanlagen sowie von Flächen in der Land- und Forstwirtschaft werden im Allgemeinen eine Bewässerung von oben sowie ein mechanisches Belüften, Vertikutieren und dergleichen eingesetzt. Um die bekannten Nachteile einer Überkopfberegnung, nämlich die Verdunstung großer Wassermengen, die mangelhafte Wurzelbildung und die Verdichtung des Bodens, zu vermeiden, werden zum Teil auch Unterflurbewässerungssysteme verwendet. Derartige Unterflurbewässerungssysteme enthalten üblicherweise ein unterflurig verlegtes Rohr- oder Schlauchsystem, durch das bei Bedarf mit Druck Wasser in den Boden gepumpt wird.

Ausgehend von solchen bekannten Bewässerungssystemen hat der Anmelder der vorliegenden Erfindung in den letzten Jahren das so genannte OSMO-DRAIN^{®}-System entwickelt. Das OSMO-DRAIN^{®}-System dient der variablen und vielseitigen Pflege insbesondere von Vegetationsschichten und enthält eine Anordnung von unterflurig verlegten, für Fluide durchlässigen Membranschläuchen, ein mit den Membranschläuchen verbundenes Kupplungselement mit einem ersten Anschluss zum Zuführen einer Flüssigkeit unter Druck zu den Membranschläuchen und einem zweiten Anschluss zum Entfernen von Flüssigkeit und/oder Gasen durch Unterdruck aus den Membranschläuchen, und eine Steuereinrichtung zum Steuern des Kupplungselements, um die Membranschläuche wahlweise mit dem ersten oder dem zweiten Anschluss des Kupplungselements zu verbinden.

Dieses System ermöglicht im Gegensatz zu den früheren Systemen mit nur einem einzigen Schlauch bzw. Schlauchsystem sowohl ein Bewässern als auch ein Entwässern und/oder Entgasen einer Vegetationsschicht, indem dieser Schlauch wahlweise mit dem Anschluss zur Flüssigkeitszufuhr unter Druck oder mit dem Anschluss zum Entfernen von Flüssigkeit und/oder Gasen durch Unterdruck zu bzw. aus dem Schlauch verbunden werden kann. Der Schlauch ist als Membranschlauch, d.h. poröser Schlauch ausgebildet, der den Durchtritt von Fluiden, wie Wasser oder Gasen, in beiden Durchtrittsrichtungen erlaubt. Im Falle des Anschlusses dieses Membranschlauches an eine Flüssigkeitszufuhr unter Druck wird die Flüssigkeit durch die poröse Wandung des Schlauches in das umgebende Erdreich der Vegetationsschicht gedrückt, während im Falle des Anschlusses an Unterdruck, das im umliegenden Erdreich übermäßig vorhandene Wasser und/oder das beispielsweise in Folge von Staunässe entwickelte Faulgas durch die poröse Wandung des Membranschlauches in den Schlauch gesaugt und dann durch das System abtransportiert wird.

Außerdem erfolgen im Gegensatz zu den früheren Systemen bei diesem System die Bewässerung und die Entwässerung der Vegetationsschicht in einer Ebene. Hierdurch wird vermieden, dass die Drainage in der tieferen Ebene früher oder später insbesondere aufgrund von Verdichtungen in diesem tieferen Schichtbereich in ihrer Funktionsfähigkeit beeinträchtigt wird, was zu einer Versauerung des Erdreichs mit den bekannten negativen Folgeerscheinungen führen würde.

In speziellen weiteren Ausführungsformen ist mit dem OSMO-DRAIN^{®}-System auch ein Belüften der Vegetationsschicht, ein Erwärmen der Vegetationsschicht (z.B. durch Zufuhr warmer Luft), ein Düngen der Vegetationsschicht und eine automatische Steuerung des Systems durch eine zentrale Steuereinheit, die mit verschiedenen Sensoren und Sonden verbunden ist, möglich.

Es hat sich gezeigt, dass dieses System nicht nur zum Anlegen von Flächen mit einer Vegetationsschicht verwendet werden kann, sondern auch Vorteile beim Anlegen von Flächen mit einer Kunstrasendecke oder einem Bodenbelag anderer Art, Beschaffenheit, Materialauswahl, usw. mit sich bringt.

Das OSMO-DRAIN^{®}-System, wie es zum Beispiel in den beiden Patentdokumenten DE 101 37 147 A1 und DE 202 11 742 U1 des Anmelders ausführlich beschrieben ist, wurde bereits in der Praxis erprobt und hat dabei seine Funktionsfähigkeit und Vielseitigkeit unter Beweis gestellt. Dabei hat es sich auch gezeigt, dass das richtige Verlegen der Membranschläuche für die Wirksamkeit des Systems von entscheidender Bedeutung ist. Beim Verlegen der Membranschläuche darf die Struktur der Boden- oder Substratschicht nicht zerstört werden, da dies die Kapillarität bzw. Durchlässigkeit des Erdreichs für Flüssigkeiten und Gase und damit die Funktionsweise des Systems beeinträchtigen würde. Auch sollen die Membranschläuche möglichst in engem Kontakt zu dem angrenzenden Erdreich verlegt werden. Außerdem ist es erwünscht, dass bei bereits bestehenden Sportrasenflächen und dergleichen eine Benutzung der Flächen innerhalb kürzester Zeit nach der Installation des Pflegesystems möglich ist.

Es ist deshalb eine Aufgabe der vorliegenden Erfindung, ein Verfahren und eine Vorrichtung zum unterflurigen Verlegen von Membranschläuchen vorzusehen, mit denen die Membranschläuche einfach verlegt werden können, eine übermäßige Verdichtung des Erdreichs um die Membranschläuche vermieden wird und ggf. bereits existierende Vegetationsschichten geschont werden.

Gemäß einem ersten Aspekt der Erfindung wird diese Aufgabe durch ein Verfahren mit den Merkmalen des Anspruchs 1 gelöst. Vorteilhafte Ausgestaltungen und Weiterbildungen des Verfahrens sind in den abhängigen Ansprüchen 2 bis 5 angegeben.

Gemäß einem zweiten Aspekt der Erfindung wird die oben genannte Aufgabe durch eine Vorrichtung mit den Merkmalen des Anspruchs 6 gelöst. Vorteilhafte Ausgestaltungen und Weiterbildungen der Vorrichtung sind in den abhängigen Ansprüchen 7 bis 12 definiert.

Zum unterflurigen Verlegen eines Membranschlauches, wie er beispielsweise bei dem OSMO-DRAIN^{®}-System eingesetzt wird, werden zunächst mittels einer Schneidevorrichtung ein oder mehrere Schlitze mit einer Tiefe von mindestens der Einbautiefe des Membranschlauches und einer Breite kleiner oder gleich dem Durchmesser des Membranschlauches unter gleichzeitiger Lockerung des Erdreichs durch eine wechselweise Querbewegung des Erdreichs zumindest im Einbautiefenbereich des Membranschlauches in den Boden geschnitten; dann wird/werden der/die geschnittene(n) Schlitz(e) mittels einer Aufweitungsvorrichtung jeweils auf eine Breite von wenigstens dem Durchmesser des Membranschlauches aufgeweitet; und schließlich wird jeweils ein Membranschlauch von einer Aufnahmevorrichtung durch eine Einlegevorrichtung in den/die aufgeweiteten Schlitz(e) eingelegt. Diese Vorgehensweise wird zum Anlegen einer Fläche mit einer Vegetationsschicht, einer Kunstrasendecke oder einem anderen Bodenbelag verwendet, sodass die Fläche wenigstens eine Funktionalität aus den Funktionalitäten Bewässern, Entwässern, Belüften, Entgasen, Beheizen, Düngen und Schädlingsbekämpfung aufweist.

Da im ersten Schritt nur relativ schmale Schlitze geschnitten werden, wird eine ggf. bereits vorhandene Vegetationsschicht nicht geschädigt. Die gleichzeitige Lockerung des Erdreichs beim Schneiden der Schlitze wirkt einer Verdichtung entgegen, sodass die für das Pflegesystem notwendige Kapillarität des an den Membranschlauch angrenzenden Erdreichs gewährleistet bleibt. Außerdem werden die geschnittenen Schlitze nur auf den Durchmesser des Membranschlauches aufgeweitet, sodass der in den aufgeweiteten Schlitz eingelegte Membranschlauch einen gewünschten engen Kontakt zum angrenzenden Erdreich hat. Das Verlegen des Membranschlauches kann so in einfacher Weise automatisiert bzw. halbautomatisiert werden, und die ggf. bereits vorhandene Rasenfläche oder dergleichen wird beim Verlegen des Membranschlauches nicht geschädigt, sodass sie bereits kurz nach der Installation des Pflegesystems wieder voll benutzbar ist.

Vorzugsweise werden gleichzeitig mehrere Membranschläuche parallel verlegt, indem die Schneidevorrichtung zum gleichzeitigen Schneiden mehrerer paralleler Schlitze ausgebildet ist; die Aufweitungsvorrichtung zum gleichzeitigen Aufweiten der mehreren parallelen Schlitze ausgebildet ist; mehrere Aufnahmevorrichtungen zum Aufnehmen jeweils eines Membranschlauches vorgesehen sind; und die Einlegevorrichtung zum gleichzeitigen Abnehmen mehrerer Membranschläuche von der Aufnahmevorrichtung und zum gleichzeitigen Einlegen der mehreren Membranschläuche in den jeweiligen der mehreren aufgeweiteten Schlitze ausgebildet ist.

Um die wechselweise Querbewegung des Erdreichs im Einbautiefenbereich des Membranschlauches zur Lockerung des Erdreichs, um einer nachteiligen Verdichtung entgegenzuwirken, zu erreichen, erfolgt in einer bevorzugten Ausführungsform das Schneiden von mehreren parallelen Schlitzen durch Schneidemesser, die für zwei benachbarte Schlitze zeitlich versetzt zueinander in den Boden schneiden.

In einer alternativen Ausführungsform wird das Schneiden eines Schlitzes der mehreren parallelen Schlitze jeweils durch mehrere Schneidemesser mit unterschiedlichen Winkeln zur Vertikalen bewirkt, wobei die aufeinander folgenden Schneidemesser für einen Schlitz sowie die Schneidemesser für zwei benachbarte Schlitze bezüglich der Vertikalen in gegenläufigen Winkeln ausgelenkt sind.

In einer noch weiteren Ausführungsform kann das Schneiden eines Schlitzes durch mehrere keilförmige Schneidemesser erfolgen, wobei die aufeinander folgenden Schneidemesser unterschiedliche Keilformen besitzen und/oder mit unterschiedlichen Anstellwinkeln in den Boden schneiden, oder durch mehrere Schneidemesser mit unterschiedlichen Winkeln zur Vertikalen erfolgen, wobei die aufeinander folgenden Schneidemesser bezüglich der Vertikalen in gegenläufigen Winkeln ausgelenkt sind.

Die obigen Schritte zum Verlegen des Membranschlauches werden vorteilhafterweise in einem Arbeitsgang durchgeführt. Hierzu sind die jeweiligen Vorrichtungen vorzugsweise an einem gemeinsamen Gerät, zum Beispiel einem selbstfahrenden Gerät, vorgesehen und in der entsprechenden Reihenfolge der Arbeitsschritte in Bewegungsrichtung des gemeinsamen Geräts hintereinander angeordnet. Alternativ können die Vorrichtungen als ein gemeinsames Gerät ausgebildet sein, das von einem Fahrzeug wie beispielsweise einem Traktor, einer Zugmaschine oder dergleichen gezogen werden kann.

Weiter können nach dem Einlegen des Membranschlauches in den Schlitz zusätzliche Mittel, wie beispielsweise Sand, Dünger, Saatgut und dergleichen in den Schlitz eingebracht werden. Nach dem Einlegen des Membranschlauches wird der Schlitz üblicherweise mittels einer nachlaufenden Walze wieder geschlossen.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine stark vereinfachte Darstellung zur Erläuterung des Aufbaus des OSMO-DRAIN^{®}-Systems, bei dem die vorliegende Erfindung in vorteilhafter Weise angewendet werden kann;
- Fig. 2: eine vereinfachte Schnittdarstellung von unterflurig verlegten Membranschläuchen des OSMO-DRAIN^{®}-Systems von Fig. 1;
- Fig. 3: eine stark schematisierte Seitenansicht einer Vorrichtung zum unterflurigen Verlegen von Membranschläuchen gemäß der vorliegenden Erfindung;
- Fig. 4: eine vergrößerte Darstellung einer bekannten Schneidevorrichtung, die in der Vorrichtung von Fig. 3 eingesetzt werden kann; und
- Fig. 5: eine schematische Schnittdarstellung zur weiteren Erläuterung der Funktionsweise einer Schneidevorrichtung, die in der Vorrichtung von Fig. 3 eingesetzt werden kann.

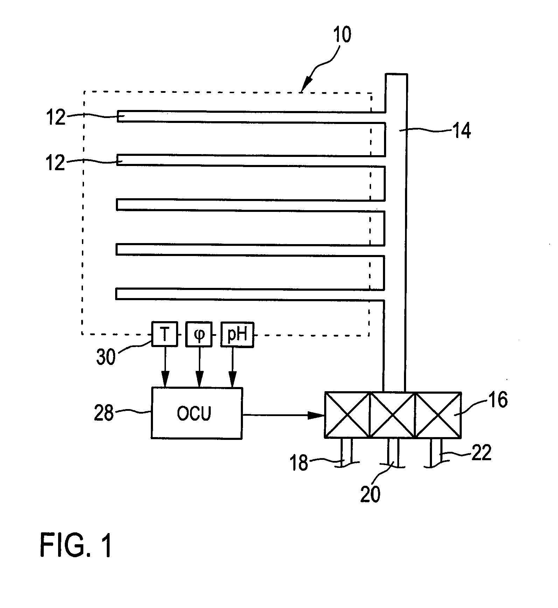

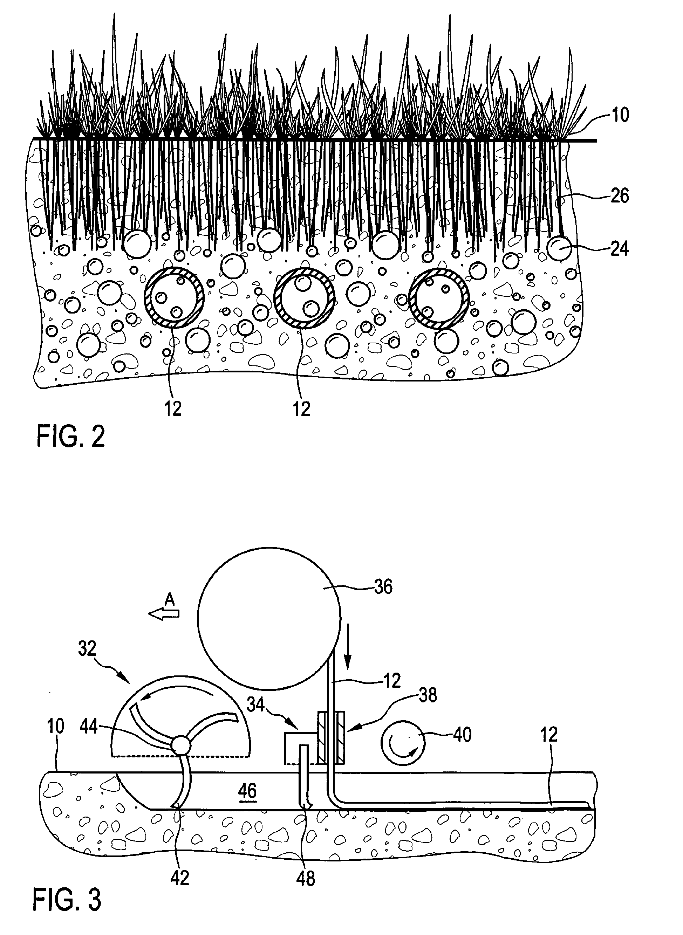

Anhand von Fig. 1 und 2 wird zunächst der Aufbau eines OSMO-DRAIN^{®}-Systems des Anmelders näher beschrieben, wie es zum Beispiel aus den eingangs genannten Patentdokumenten DE 101 37 147 A1 und DE 202 11 742 U1 bekannt ist und bei dem die vorliegende Erfindung zum unterflurigen Verlegen von Membranschläuchen in vorteilhafter Weise angewendet werden kann. Um eine unnötig detaillierte Beschreibung des OSMO-DRAIN^{®}-Systems hier zu vermeiden, soll diesbezüglich vollinhaltlich auf diese beiden genannten Druckschriften Bezug genommen werden.

Während die vorliegende Erfindung nachfolgend anhand ihrer bevorzugten Anwendung auf eine Fläche mit einer Vegetationsschicht (Neuanlage oder Altbestand) erläutert wird, ist die Erfindung in analoger Weise auch zum Anlegen von Flächen einsetzbar, die mit einer Kunstrasendecke oder einem Bodenbelag anderer Art, Beschaffenheit, Materialauswahl, usw. versehen werden. Speziell bei Kunstrasenflächen zeigen sich hier in der Praxis spezielle Vorteile des OSMO-DRAIN^{®}-Systems (insbesondere durch die mögliche Funktionalität des Beheizens).

Das OSMO-DRAIN^{®}-System zur Pflege einer Vegetationsschicht 10, wie zum Beispiel einer Rasenfläche, Sportrasenfläche, Garten- oder Parkanlage oder einer Fläche in der Land- und Forstwirtschaft, weist im Allgemeinen eine Vielzahl von Membranschläuchen 12 auf, die etwa parallel unterflurig in der Vegetationsschicht 1 verlegt sind (siehe auch Fig. 2). Die Membranschläuche 12 sind dabei zum Beispiel über einen gemeinsamen Versorgungsschlauch 14 an ein Kupplungselement 16 angeschlossen. Alternativ könnte auch auf den Versorgungsschlauch 14 verzichtet und die Membranschläuche 12 über einen geeigneten Verteiler direkt an das Kupplungselement 16 angeschlossen werden. Die Einbautiefe der Membranschläuche 12 liegt - abgesehen von Sonderanwendungen - allgemein zwischen 12 und 25 cm, meist zwischen 15 und 20 cm.

Das Kupplungselement 16 weist in dem in Fig. 1 dargestellten Ausführungsbeispiel drei Anschlüsse 18, 20, 22 auf. Über einen ersten Anschluss 18 kann dem Versorgungsschlauch 14 und den Membranschläuchen 12 unter Druck eine Flüssigkeit, insbesondere Wasser, zugeführt werden. Die unter Druck in die Membranschläuche 12 gepumpte Flüssigkeit 24 tritt durch die poröse Wandung der Membranschläuche 12 in das umliegende Erdreich der Vegetationsschicht 10 aus und gelangt so direkt in den Wurzelbereich 26. Über einen zweiten Anschluss 20 des Kupplungselements 16 sind der Versorgungsschlauch 14 und die Membranschläuche 12 an Unterdruck anschließbar. Durch den Unterdruck werden die Schläuche 12, 14 zunächst entleert, sodass sich auch in den Schläuchen 12 und 14 ein entsprechender Unterdruck aufbaut. Durch diesen Unterdruck im Schlauchinnern dringen Flüssigkeiten und/oder Gase aus dem umliegenden Erdreich durch die poröse Wandung der Membranschläuche 12 ein und werden abgesaugt.

Das Kupplungselement 16 enthält weiter einen dritten Anschluss 22, über den Druckluft angeschlossen werden kann. Diese Druckluft wird über das Kupplungselement 16 in die Schläuche 12, 14 gepumpt und kann beispielsweise dazu verwendet werden, die Poren der porösen Wandung der Membranschläuche 12 gelegentlich freizublasen, um eine Verstopfung durch das umliegende Erdreich zu verhindern und damit ihre Funktionalität zu gewährleisten. Ferner kann die Vegetationsschicht 10 mittels dieser Druckluft belüftet und die Wurzeln und Pflanzen der Vegetationsschicht 10 mit O₂ und CO₂ versorgt werden. Die Belüftung mit warmer Luft ermöglicht zudem ein schnelles und gleichmäßiges Beheizen der angelegten Fläche.

In einer bevorzugten Ausführungsform sind der obige zweite und der obige dritte Anschluss 20 und 22 als ein gemeinsamer Anschluss ausgebildet, der an eine Pumpe zum Beispiel in Form eines Seitenkanalverdichters anschließbar ist, die wahlweise im Saugbetrieb oder im Druckbetrieb betrieben werden kann. Zwischen dem gemeinsamen Anschluss und dieser Pumpe ist ein Wasserabscheider vorgesehen, um das konstante Vakuum aufrechtzuerhalten und die Pumpe gegen Flüssigkeit zu schützen.

Der Versorgungsschlauch 14 und damit die Membranschläuche 12 werden über das Kupplungselement 16 je nach Bedarf mittels geeigneter Ventile, wie beispielsweise elektromagnetischer oder über Druckluft betätigter Ventile, wahlweise an einen der drei Anschlüsse 18, 20, 22 angeschlossen. Diese Ventile des Kupplungselements 16 werden von einer Steuereinrichtung (OCU) 28 in entsprechender Weise angesteuert. Die Steuereinrichtung 28 weist einen Speicher auf, in dem der Benutzer die von ihm gewünschten Pflegebedingungen und Pflegezyklen der Vegetationsschicht 10 speichern kann, sodass die Pflege automatisch erfolgt. Außerdem kann der Benutzer natürlich jederzeit der Steuereinrichtung 28 manuell Steuerbefehle eingeben, um die Funktion des Kupplungselements 16 unmittelbar und/oder kurzfristig zu beeinflussen oder die gespeicherten Werte zu ändern. Zusätzlich ist die Steuereinrichtung 28 mit verschiedenen Sensoren 30 verbunden, welche für die Pflege der Vegetationsschicht 10 wichtige Umgebungsbedingungen wie zum Beispiel die Temperatur T und die Feuchtigkeit ϕ sowohl der Luft als auch des Erdreichs sowie den pH-Wert des Erdreichs erfassen, um die Pflege der Vegetationsschicht 10 auf diese aktuellen Umgebungsbedingungen abzustimmen.

Die porösen Membranschläuche 12 sind für Fluide wie Flüssigkeiten und Gase in beiden Durchtrittsrichtungen durchlässig und bestehen vorzugsweise aus einem chemisch und physikalisch widerstandsfähigen Kunststoff- oder Kautschukmaterial. Um eine lange Haltbarkeit des verlegten Pflegesystems ohne Instandsetzungsmaßnahmen zu gewährleisten, sollten die Membranschläuche insbesondere frostsicher, bruchsicher, resistent gegen der Flüssigkeit beigefügte Pflegewirkstoffe, druckfest, usw. sein. In einer bevorzugten Ausführungsform sind die Membranschläuche 12 aus einem Altreifengranulat mittels eines geeigneten Extrusionsverfahrens gefertigt.

Die Einbautiefe, der Durchmesser, der gegenseitige Abstand und die Porosität der Wandung dieser Membranschläuche 12 sind an die Bodenbeschaffenheit und die Klimaverhältnisse der jeweils zu pflegenden Vegetationsschicht 10 anpassbar.

Zusätzlich kann unterhalb der Anordnung der Membranschläuche 12 auch noch eine wasserundurchlässige Trennvorrichtung (nicht dargestellt), zum Beispiel in Form einer Folie oder eines Profilblechs angeordnet werden, auf der dann die Membranschläuche 12 verlegt werden, um ein Versickern von Wasser im Erdboden zu verhindern.

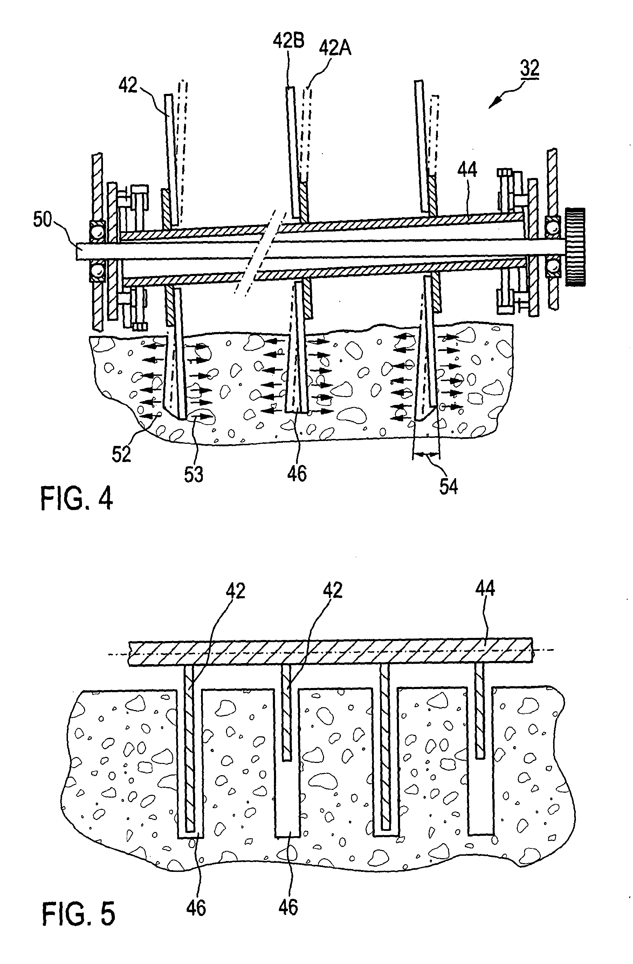

Nachfolgend wird nun unter Bezugnahme auf Fig. 3 zunächst der Grundaufbau einer Vorrichtung zum unterflurigen Verlegen von Membranschläuchen 12 und ihre Funktionsweise näher erläutert. Anschließend werden Bezug nehmend auf Fig. 4 und 5 verschiedene Merkmale einer bevorzugten Schneidevorrichtung diskutiert.

Die Vorrichtung zum unterflurigen Verlegen eines Membranschlauches 12 enthält insbesondere eine Schneidevorrichtung 32, eine Aufweitungsvorrichtung 34, eine Aufnahmevorrichtung 36 zum Aufnehmen eines zu verlegenden Membranschlauches 12, eine Einlegevorrichtung 38 und eine Walze 40. Diese Komponenten 32 - 40 sind in einer Bewegungsrichtung (Pfeil A) beim Verlegevorgang in dieser Reihenfolge hintereinander angeordnet. In bevorzugter Weise können diese Komponenten 32 - 40 dabei an einem gemeinsamen Gerät, zum Beispiel einem selbstfahrenden Gerät oder einem an ein Fahrzeug wie einen Traktor, eine Zugmaschine oder dergleichen anhängbaren Gerät, montiert sein, um das Verlegen des Membranschlauches 12 in einem Arbeitsgang durchführen zu können.

Wie in Fig. 3 angedeutet, sind die Aufweitungsvorrichtung 34 und die Einlegevorrichtung 38 bevorzugt integral ausgebildet. Das heißt, sie sind zum Beispiel als eine Einheit ausgebildet oder fest miteinander verbunden. Insbesondere sollen die beiden Vorrichtungen 34 und 38 möglichst nah hintereinander angeordnet sein.

In der Seitenansicht von Fig. 3 ist jeweils nur eine der genannten Komponenten 32 - 40 zu erkennen, die dem Verlegen eines Membranschlauches 12 dienen. Selbstverständlich werden in einer bevorzugten Ausführungsform der Erfindung gleichzeitig mehrere Membranschläuche 12 parallel verlegt, sodass auch die Komponenten 32 - 40 in entsprechender Anzahl parallel zueinander (in der Richtung senkrecht zur Zeichnungsebene nebeneinander) an der Vorrichtung vorgesehen sind. Da die parallel angeordneten Komponenten 32 - 40 grundsätzlich gleich aufgebaut sind, wird nachfolgend zunächst nur die Vorrichtung zum Verlegen eines Membranschlauches 12 beschrieben.

Die in Bewegungsrichtung A vorderste Komponente, die Schneidevorrichtung 32 enthält mehrere (zum Beispiel drei) Schneidemesser 42, die an einer gemeinsamen Rotationswelle 44 in festem Winkelabstand zueinander angebracht sind. Diese Schneidemesser 42 dienen dem Schneiden eines Schlitzes 46 in den Boden der Vegetationsfläche 10. Die Schneidevorrichtung 32 ist dabei so positioniert und die Schneidemesser 42 sind dabei so bemessen, dass der Schlitz 46 eine Tiefe von mindestens der Einbautiefe des zu verlegenden Membranschlauches 12 aufweist, wobei die Einbautiefe der Membranschläuche 12 im Bereich von 12 bis 25 cm, meistens zwischen 15 und 20 cm liegt, ohne auf diese Werte beschränkt zu sein.

Ferner ist die Breite der Schneidemesser 42 (quer zur Bewegungsrichtung A) kleiner oder gleich dem Durchmesser des zu verlegenden Membranschlauches 12 gewählt, sodass eine ggf. vorhandene Vegetationsfläche 10 nicht geschädigt wird.

Wie in Fig. 3 angedeutet, sind die Schneidemesser 42 etwa sichelförmig gekrümmt ausgebildet, wobei ihre Wölbung im Schlitz 46 bezüglich der Bewegungsrichtung A nach hinten gerichtet ist. Hierdurch wird verhindert, dass Steine und dergleichen nach oben zur Oberfläche der Vegetationsfläche 10 befördert werden; außerdem erfolgt der Druck durch die Schneidemesser 42 auf das Erdreich hauptsächlich in Richtung nach unten, sodass eine seitliche Verdichtung des Erdreichs verringert werden kann.

Das Schneiden des Schlitzes 46 erfolgt durch eine Kombination der Drehbewegung der Rotationswelle 44 mit den daran angebrachten Schneidemessern 42 und der Vorwärtsbewegung der Schneidevorrichtung 32 in der Bewegungsrichtung A.

Nach dem Schneiden des Schlitzes 46 mittels der Schneidevorrichtung 32 wird der Schlitz 46 durch ein feststehendes Aufweitungsmesser 48 der Aufweitungsvorrichtung 34 auf eine Breite im Wesentlichen gleich dem Durchmesser des zu verlegenden Membranschlauches 12 aufgeweitet. Das Aufweitungsmesser 48 hat dabei eine Eindringtiefe ins Erdreich, die der Einbautiefe des zu verlegenden Membranschlauches 12 entspricht. Wie in Fig. 3 angedeutet, ist das untere Ende des Aufweitungsmessers 48 bezüglich der Bewegungsrichtung A nach hinten abgewinkelt, um zu vermeiden, dass Steine und dergleichen an die Oberfläche befördert werden.

In der Aufnahmevorrichtung 36 befindet sich eine Haspel, auf der ein zu verlegender Membranschlauch 12 aufgewickelt ist. Mit Hilfe eines Führungselements der Einlegevorrichtung 38 wird der Membranschlauch 12 von der Haspel abgewickelt und in den durch das Aufweitungsmesser 48 aufgeweiteten Schlitz 46 eingelegt. Die Zufuhr des Membranschlauches 12 in den Schlitz 46 kann allein durch die Bewegung A der Einlegevorrichtung 38 (und der übrigen Komponenten 32 - 40) erfolgen; wahlweise kann aber auch eine zusätzliche Fördereinrichtung vorgesehen sein.

Nachdem der Membranschlauch 12 in den Schlitz 46 eingelegt ist, wird der Schlitz durch die nachlaufende Walze 40 wieder geschlossen.

Obwohl nicht dargestellt, kann die Vorrichtung zum unterflurigen Verlegen eines Membranschlauches 12 zusätzlich einen Vorratsbehälter für zusätzliche Mittel, wie beispielsweise Sand, Dünger, Saatgut und dergleichen, aus dem das zusätzliche Mittel in den Schlitz einbringbar ist, und/oder eine weitere Aufnahmevorrichtung für eine wasserundurchlässige Trennvorrichtung sowie eine Einlegevorrichtung zum Abnehmen der Trennvorrichtung von der weiteren Aufnahmevorrichtung und Einlegen der Trennvorrichtung in den aufgeweiteten Schlitz, bevor der Membranschlauch 12 eingelegt wird, aufweisen.

Wie oben erwähnt, ist die Schneidevorrichtung 32 zum Schneiden eines Schlitzes 46 in das Erdreich, wobei der Hauptdruck in Richtung nach unten zeigt, ausgebildet, sodass eine seitliche Verdichtung des Erdreichs um den anschließend eingelegten Membranschlauch 12 reduziert wird. Die Schneidevorrichtung 32 ist weiter so ausgebildet, dass beim Schneiden des Schlitzes 46 gleichzeitig eine Lockerung des Erdreichs zumindest im Einbautiefenbereich des Membranschlauches 12 durch eine wechselweise Querbewegung (Richtung senkrecht zur Zeichnungsebene von Fig. 3) des Erdreichs erzielt wird. Dies kann durch verschiedene Ausführungsformen der Schneidevorrichtung 32 realisiert werden.

In einer bevorzugten Ausführungsform wird eine Schneidevorrichtung 32 eingesetzt, wie sie in Fig. 4 und 5 dargestellt ist und zum Beispiel in der WO 2005/074667 A1 offenbart ist, auf welche hierdurch bezüglich des Aufbaus und der Funktionsweise der Schneidevorrichtung vollinhaltlich Bezug genommen wird.

Zum gleichzeitigen Schneiden mehrerer paralleler Schlitze 46, um letztlich gleichzeitig mehrere parallele Membranschläuche 12 zu verlegen, weist die Schneidevorrichtung 32 die gemeinsame Rotationswelle 44 auf, an der mehrere gleichmäßig beabstandete Schneidemesserebenen vorgesehen sind. In jeder Schneidemesserebene sind mehrere (hier zum Beispiel drei) Schneidemesser 42 in einem festen Winkelabstand zueinander angeordnet.

Diese Schneidemesser 42 sind in den benachbarten Schneidemesserebenen in unterschiedlichen Winkelpositionen an der Rotationswelle 44 angebracht, sodass die Schneidemesser 42 für zwei benachbarte Schlitze 46 zeitlich versetzt zueinander in den Boden schneiden, wie in Fig. 5 veranschaulicht. Durch diese Maßnahme wird bewirkt, dass jeweils nur ein Schneidemesser 42 von zwei benachbarten Schlitzen 46 eine Querverdichtung des Erdreiches verursacht, welche kurz darauf von dem Schneidemesser 42 für den anderen Schlitz 46 in entsprechender Gegenrichtung bewirkt wird. Hierdurch wird das Erdreich in Querrichtung zur Bewegungsrichtung A etwas hin und her geschoben und damit gelockert. Gleichzeitig werden Steine seitlich aus dem Schlitz heraus verschoben, sodass sie den anschließend eingelegten Membranschlauch 12 nicht beeinträchtigen oder gar beschädigen.

Um diesen Effekt noch zu verstärken, ist die gemeinsame Rotationswelle 44 der Schneidemesser 42 zum Beispiel schräg auf einer zentralen Drehantriebswelle 50 drehfest befestigt, wie in Fig. 4 dargestellt und in der WO-A-2005/074667 ausführlich erläutert. Durch diese Maßnahme wird erreicht, dass die Schneidemesser 42 in einer Schneidemesserebene in unterschiedlichen Winkelstellungen zur Vertikalen in das Erdreich schneiden, wie durch 42A und 42B in Fig. 4 angedeutet. Vorzugsweise sind auch die zwei Schneidemesser 42 für die benachbarten Schlitze 46 jeweils gegenläufig zur Vertikalen ausgelenkt. Hierdurch wird das Erdreich in einem Schlitz 46 abwechselnd nach rechts und nach links geschoben und damit gelockert, sodass sich im unteren Bereich, dem Einbautiefenbereich für den Membranschlauch 12 eine Aufweitung des Schlitzes 46 ergibt, wie bei 52, 53, 54 in Fig. 4 veranschaulicht.

Der Fachmann wird leicht erkennen, dass die gegenläufige Auslenkung zur Vertikalen der Schneidemesser 42 einer Schneidemesserebene auch durch andere Anordnungen der Schneidemesser 42 und/oder der Rotationswelle 44 erreicht werden kann.

Die erfindungsgemäße Vorrichtung zum unterflurigen Verlegen von Membranschläuchen kann beispielsweise durch einen einfachen Umbau einer Schneidevorrichtung hergestellt werden, wie sie zum Beispiel in der WO 2005/074667 A1 offenbart und oben beschrieben ist. Da die Membranschläuche 12 im Allgemeinen nicht so dicht verlegt werden müssen wie eine Vertikutierung des Bodens erfolgt, wird ausgehend von einem Basisgerät nur ein Teil der Schneidemesserebenen zum Verlegen der Membranschläuche genutzt.

Als alternative Ausführungsform zur Lockerung des Erdreichs beim Vorgang des Schneidens der Schlitze 46 mit der Schneidevorrichtung 32 ist es auch möglich, die Schneidemesser 42 jeweils keilförmig auszubilden. Wenn dann die Schneidemesser 42 in einer Schneidemesserebene so angeordnet sind, dass sie unterschiedliche Keilformen oder unterschiedliche Ausrichtungen der Keilformen haben, so kann auch in diesem Fall das Erdreich wechselweise in Querrichtung verschoben werden.

Ist die Schneidevorrichtung 32 in diesem Fall für das gleichzeitige Schneiden mehrerer paralleler Schlitze 46 ausgebildet, so haben die Schneidemesser 42 für zwei benachbarte Schlitze 46 vorzugsweise ebenso die, unterschiedliche Keilformen oder unterschiedlichen Ausrichtungen der Keilformen zueinander, um den Effekt noch zu verstärken.

Die oben beschriebenen Maßnahmen zur seitlichen Hin- und Herbewegung des Erdreichs, um dieses gleichzeitig zum Schneiden des Schlitzes zu lockern, können in beliebiger Weise miteinander kombiniert oder durch weitere Maßnahmen ersetzt oder ergänzt werden.

Die oben im Detail beschriebenen Verfahren und Vorrichtungen der Erfindung zum unterflurigen Verlegen von Membranschläuchen zum Aufbau des so genannten OSMO-DRAIN^{®}-Systems sind in vorteilhafter Weise zum Anlegen von Flächen mit einer Vegetationsschicht, einer Kunstrasendecke oder auch einem anderen Bodenbelag verwendbar. Die Flächen weisen dabei wenigstens eine spezielle Funktionalität aus der folgenden Gruppe von Funktionalitäten auf: Bewässern, Entwässern, Belüften, Entgasen, Beheizen, Düngen, Schädlingsbekämpfung und dergleichen.

### BEZUGSZIFFERNLISTE

- 10: Vegetationsfläche
- 12: Membranschlauch
- 14: Versorgungsschlauch
- 16: Kupplungselement
- 18: Anschluss von 16
- 20: Anschluss von 16
- 22: Anschluss von 16
- 24: Flüssigkeit
- 26: Wurzelbereich
- 28: Steuereinrichtung
- 30: Sensoren
- 32: Schneidevorrichtung
- 34: Aufweitungsvorrichtung
- 36: Aufnahmevorrichtung
- 38: Einlegevorrichtung
- 40: Walze
- 42, 42A, 42B: Schneidemesser
- 44: Rotationswelle
- 46: Schlitz
- 48: Aufweitungsmesser
- 50: Drehantriebswelle
- 52, 53: Querbewegung des Erdreichs
- 54: Aufweitung des Erdreichs

## Patentansprüche

1. Verfahren zum unterflurigen Verlegen eines Membranschlauches (12), mit den Schritten:
a) Schneiden eines oder mehrerer paralleler Schlitze (46) in den Boden mit einer Tiefe von mindestens der Einbautiefe des Membranschlauches (12) und einer Breite kleiner oder gleich dem Durchmesser des Membranschlauches (12) unter gleichzeitiger Lockerung des Erdreichs zumindest im Einbautiefenbereich des Membranschlauches durch eine wechselweise Querbewegung des Erdreichs;
b) Aufweiten des/der geschnittenen Schlitze(s) (46) auf eine Breite von wenigstens dem Durchmesser des Membranschlauches; und
c) Einlegen jeweils eines Membranschlauches (12) in den/die aufgeweiteten Schlitz(e) (46),
wobei das Verfahren zum Anlegen einer Fläche mit einer Vegetationsschicht, einer Kunstrasendecke oder einem anderen Bodenbelag verwendet wird, sodass die Fläche wenigstens eine Funktionalität aus den Funktionalitäten Bewässern, Entwässern, Belüften, Entgasen, Beheizen, Düngen und Schädlingsbekämpfung aufweist.

2. Verfahren nach Anspruch 1,
**dadurch gekennzeichnet,**
**dass** das Schneiden von mehreren parallelen Schlitzen (46) in Schritt a) durch Schneidemesser (42) erfolgt, wobei die Schneidemesser für zwei benachbarte Schlitze (46) zeitlich versetzt zueinander in den Boden schneiden.

3. Verfahren nach Anspruch 1,
**dadurch gekennzeichnet,**
**dass** das Schneiden eines Schlitzes (46) der mehreren parallelen Schlitze in Schritt a) jeweils durch mehrere Schneidemesser (42) mit unterschiedlichen Winkeln zur Vertikalen erfolgt, wobei die aufeinander folgenden Schneidemesser (42) für einen Schlitz sowie die Schneidemesser für zwei benachbarte Schlitze bezüglich der Vertikalen gegenläufig ausgelenkt sind.

4. Verfahren nach Anspruch 1,
**dadurch gekennzeichnet,**
**dass** das Schneiden eines Schlitzes (46) in Schritt a) durch mehrere keilförmige Schneidemesser (42) erfolgt, wobei die aufeinander folgenden Schneidemesser unterschiedliche Keilformen besitzen und/oder mit unterschiedlichen Anstellwinkeln in den Boden schneiden.

5. Verfahren nach Anspruch 1,
**dadurch gekennzeichnet,**
**dass** das Schneiden eines Schlitzes (46) in Schritt a) durch mehrere Schneidemesser (42) mit unterschiedlichen Winkeln zur Vertikalen erfolgt, wobei die aufeinander folgenden Schneidemesser bezüglich der Vertikalen gegenläufig ausgelenkt sind.

6. Vorrichtung zum unterflurigen Verlegen eines Membranschlauches zum Anlegen einer Fläche mit einer Vegetationsschicht, einer Kunstrasendecke oder einem anderen Bodenbelag, sodass die Fläche wenigstens eine Funktionalität aus den Funktionalitäten Bewässern, Entwässern, Belüften, Entgasen, Beheizen, Düngen und Schädlingsbekämpfung aufweist, mit
einer Schneidevorrichtung (32) zum Schneiden eines oder mehrerer paralleler Schlitze (46) in den Boden mit einer Tiefe von mindestens der Einbautiefe des Membranschlauches (12) und einer Breite kleiner oder gleich dem Durchmesser des Membranschlauches unter gleichzeitiger Lockerung des Erdreichs durch eine wechselweise Querbewegung des Erdreichs zumindest im Einbautiefenbereich des Membranschlauches;
einer Aufweitungsvorrichtung (34) zum Aufweiten des/der geschnittenen Schlitze(s) (46) auf eine Breite von wenigstens der Breite des Membranschlauches (12);
einer Aufnahmevorrichtung (36) zum Aufnehmen eines oder mehrerer parallel zu verlegender Membranschläuche (12); und
einer Einlegevorrichtung (38) zum Abnehmen des/der Membranschlauches/Membranschläuche (12) von der Aufnahmevorrichtung (36) und Einlegen des/der Membranschlauches/Membranschläuche (12) in den/die aufgeweiteten Schlitz(e) (46).

7. Vorrichtung nach Anspruch 6,
**dadurch gekennzeichnet,**
**dass** die Schneidevorrichtung (32) mehrere Schneidemesser (42) zum Schneiden eines Schlitzes (46) aufweist, die an einer gemeinsamen Rotationswelle (44) im Winkelabstand zueinander angeordnet sind.

8. Vorrichtung nach Anspruch 7,
**dadurch gekennzeichnet,**
**dass** die mehreren Schneidemesser (42) der Schneidevorrichtung (32) keilförmig ausgebildet sind, wobei die aufeinander folgenden Schneidemesser unterschiedliche Keilformen besitzen und/oder mit unterschiedlichen Anstellwinkeln an der Rotationswelle (44) angebracht sind.

9. Vorrichtung nach Anspruch 7,
**dadurch gekennzeichnet,**
**dass** die mehreren Schneidemesser (42) der Schneidevorrichtung (32) in unterschiedlichen Winkeln zur Vertikalen ausgerichtet sind, wobei die aufeinander folgenden Schneidemesser bezüglich der Vertikalen gegenläufig ausgelenkt sind.

10. Vorrichtung nach Anspruch 6,
**dadurch gekennzeichnet,**
**dass** die Schneidevorrichtung (32) für jeden der mehreren parallelen Schlitze (46) jeweils mehrere Schneidemesser (42) aufweist, die an einer gemeinsamen Rotationswelle (44) im Winkelabstand zueinander angeordnet sind; und
**dass** die Schneidemesser (42) für zwei benachbarte Schlitze (46) jeweils in unterschiedlichen Winkelpositionen an der Rotationswelle (44) angebracht sind.

11. Vorrichtung nach Anspruch 6,
**dadurch gekennzeichnet,**
**dass** die mehreren Schneidemesser (42) der Schneidevorrichtung (32) in unterschiedlichen Winkeln zur Vertikalen ausgerichtet sind, wobei die aufeinander folgenden Schneidemesser (42) für einen Schlitz (46) sowie die Schneidemesser (42) für zwei benachbarte Schlitze jeweils bezüglich der Vertikalen gegenläufig ausgelenkt sind.
